# EUROPEAN PATENT SPECIFICATION

(11) **EP 1 099 863 B1**
(45) Date of publication and mention of the grant of the patent: **02.02.2005**
(21) Application number: 99122424.7
(22) Date of filing: 10.11.1999
(51) Int. Cl.: F16B 12/26, F16B 12/46, F16B 5/06

(54) **Interconnecting structure for multiple members**
Verbindungsstruktur für vielfältige Teile
Structure pour l'interconnexion de pièces multiples

(43) Date of publication of application: 16.05.2001
(73) Proprietor: Saito, Tetsuro, Sagamihara-city, Kanagawa-pref. (JP)
(72) Inventor: Saito, Tetsuro, Sagamihara-city, Kanagawa-pref. (JP)
(74) Representative: Strasser, Wolfgang, Dipl.-Phys

(56) References cited:
- DE-A- 2 826 154
- FR-A- 2 333 418
- US-A- 3 848 388

## Description

### Technical Field of the Invention

This invention relates to an interconnecting arrangement for multiple members for interconnecting a plurality of members such as vertical and lateral panels used in furniture, interior finishingwork, partitions, scaffolding, guardrails, wooden structures etc., particularly to an interconnecting structure for multiple members that strongly fastens interconnected members by anchoring means provided at tip portions of an interconnector upon insertion of the interconnector into sectionally rectangular grooves provided in side surfaces of vertical and lateral panels or the like.

### Background Art

Conventionally, the various wooden members and various metal and plastic panel-like members of furniture, interior finishing work, partitions, scaffolding, guardrails, wooden structures etc. have been joined by use of nails, screws, rivets etc. In addition, the various fastening interconnectors used in the assembly of structures, furniture etc. and the joining of the members of scaffolding, guardrails and other architectural and civil engineering structures have been developed solely for the purpose of joining the members.

These conventional interconnectors have various drawbacks, such as that they do not allow disassembly and reassembly or, even if they do, are very troublesome to reuse, and that the connection between pieces tends to be loose when the same holes or threaded holes are reused. Moreover, the conventional interconnectors are not designed to provide high strength in small numbers but are designed solely for the purpose of joining with no thought to the strength of the joint.

When a plurality of vertical and lateral panels or other such members used in furniture, interior finishing work, partitions, scaffolding, guardrails, wooden structures etc. are successively interconnected using conventional interconnectors, the interconnectors protrude from the side faces of the panels (vertical and lateral panels) . This makes it difficult to treat end surface protrusions in the joined state. Since the structure has the interconnectors attached to the outer surface of the members, moreover, even simple structures have to be finished with the interconnectors protruding from the vertical and lateral panels. Owing to the relationship with the wall surface, therefore, the structure is degraded aesthetically by gaps present at the joined surfaces. Furthermore, in the case of buildings, room interior finish work, scaffolding, guardrails etc., the need for strength has made it necessary to install braces solely for reinforcement, sacrificing good esthetics. In addition, reinforcement of a right-angle joint between two panels has required provision of angles at the corners. Such angles may also spoil the appearance of the structure. They are also liable to provide insufficient strength because the bending moment acts on only the members.

German published patent application DE-A-28 26 154 discloses an interconnecting arrangement comprising at least one vertical panel in opposite sides of which grooves are formed, at least one lateral panel in opposite sides of which grooves are formed, at least one interconnector having a stem portion to which a first pair of legs is integrally connected to extend from said stem portion in a first direction and to which a second pair of legs is integrally connected to extend from said stem portion in a second direction being perpendicular to said first direction, wherein all of said legs have sectional shapes matching those of the respective grooves in said vertical and said lateral panels, respectively, and wherein said grooves in said vertical and said lateral panels, respectively, and said legs of said interconnector have dove tail sectional shapes.

### Summary of the Invention

This invention was accomplished to overcome these technical shortcomings of the prior art by providing a structure for interconnecting multiple members consisting of vertical panels and lateral panels that offers strong joining force and enables interconnection of the multiple members by a one-touch operation of insertion into sectionally rectangular grooves provided in side surfaces of vertical and lateral panels and pressure deformation of the interconnectors at the tip thereof.

These objects are achieved by an interconnecting arrangement as defined in the appended claim 1.

A second embodiment of the invention provides an interconnecting arrangement for multiple members wherein further;
the anchoring means provided at the tip portions of each pair of legs of the interconnector are inwardly projecting claws for enabling the pairs of legs of the interconnector to establish strong interconnection between a vertical panel and a lateral panel meeting at a right angle by pressing the claws into strong pressure contact with the floors of sectionally rectangular grooves.

A third embodiment of the invention provides an interconnecting arrangement for multiple members
wherein further ;
the anchoring means provided at the tip portions of the legs of the interconnector are swingable drive-fit triangular-rod members made of a hard material,
the interconnecting structure for multiple members being used to interconnect the vertical panel and the lateral panel by pounding sharp edges of the triangular-rod members into the floors of the grooves with a hammer or the like to strongly fasten the interconnector in the sectionally rectangular grooves.

A fourth embodiment of the invention provides an interconnecting arrangement for multiple members
wherein:
the anchoring means provided at the tip portions of the legs of the interconnector are cylinders capable of slight fore-aft movement having sharp blade edges projecting from diametrically opposite portions of their curved surfaces, the blades swinging when the interconnector is inserted into the grooves of the vertical panel and the lateral panel to enable insertion with sliding along the groove floors and the sharp blade edges contacting the floors of the grooves to prevent easy detachment of the interconnector from the grooves when extraction of the interconnector is attempted.

### Brief Description of Drawings

Figure 1 is a perspective view of an interconnector used in a first embodiment of the interconnecting structure for multiple members according to the present invention;
Figure 2 is a perspective view of another interconnector;
Figure 3 is a perspective view of another interconnector;
Figure 4 is an exploded perspective view showing how an interconnector is used to interconnect multiple members in the interconnecting structure for multiple members according to the present invention;

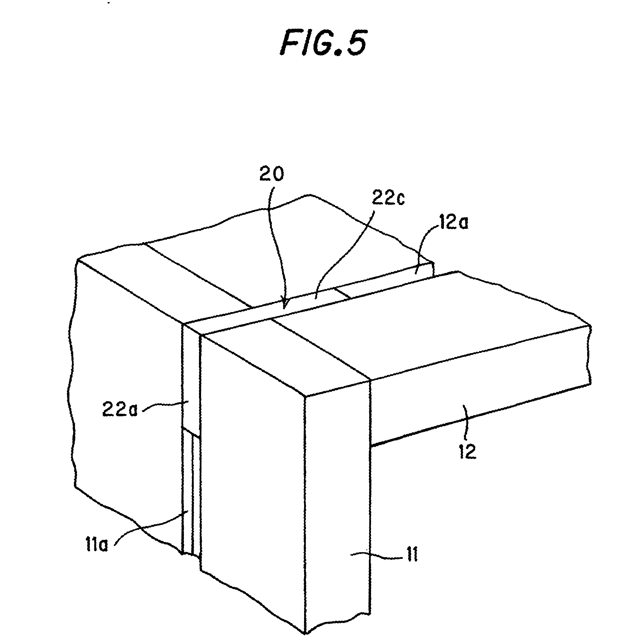

Figure 5 is a perspective view showing multiple members interconnected by an interconnector in the interconnecting structure for multiple members; and
Figure 6 is a perspective view showing variations of the interconnector legs.

### Best Modes for Carrying out the Invention

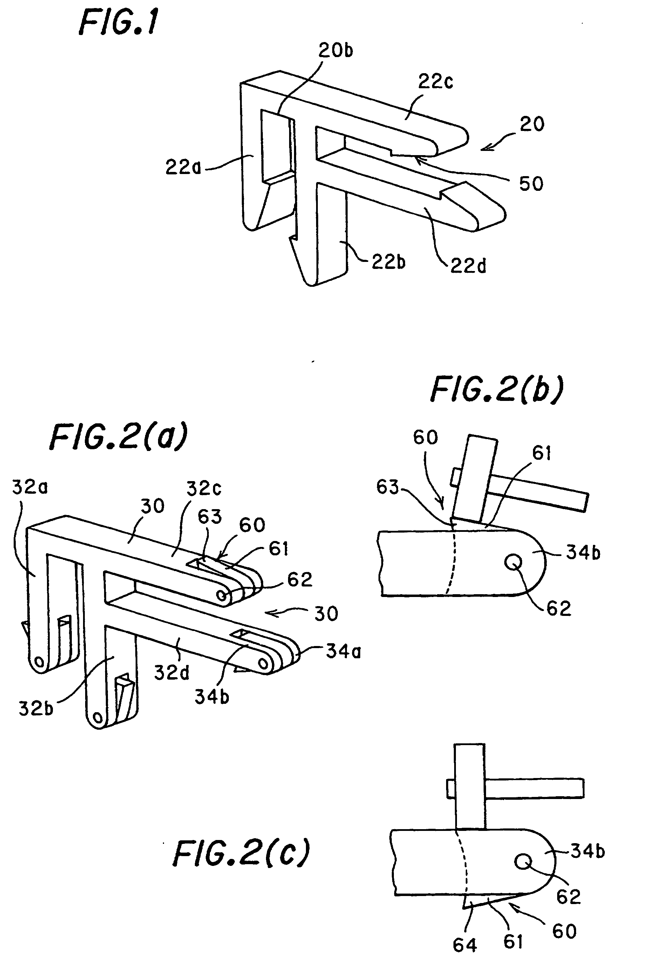

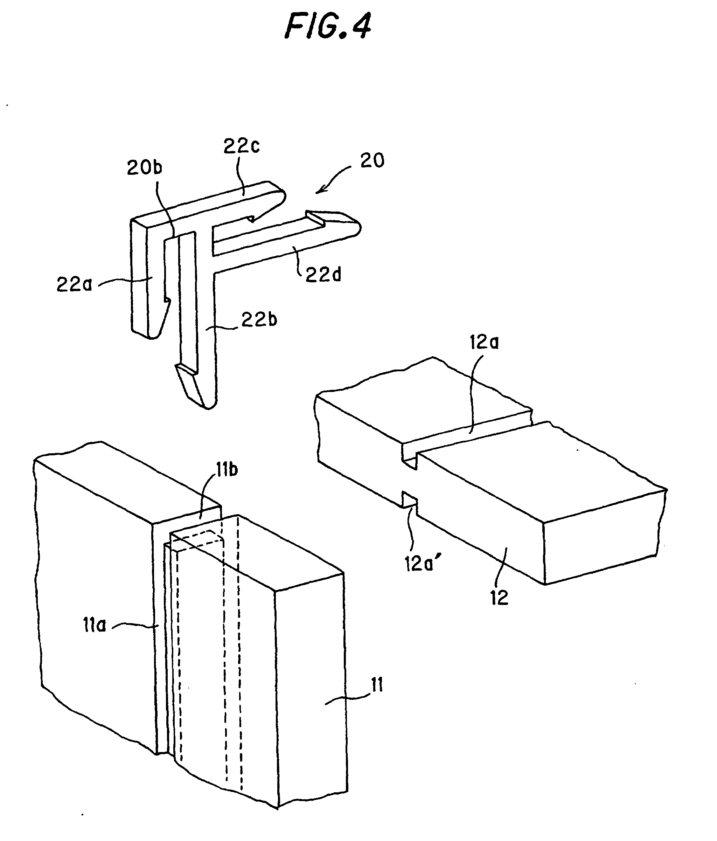

Embodiments of the invention will now be explained with reference to the drawings. Figures 1 to 3 show different configurations of the interconnector of the interconnecting structure for multiple members according to the present invention. Figure 4 shows the overall interconnecting structure for multiple members using the interconnector of Figure 1.

Figure 4 shows an example in which an embodiment of the invention is used to interconnect a vertical panel 11 and a lateral panel 12, both made of wood, at right angles. The vertical panel 11 is formed with a sectionally rectangular groove 11a. Therefore, in the case of applying this invention to ordinary buildings, partitions, furniture, scaffolding, guardrails, structures used in civil engineering and the like, the groove 11a is easy to cut owing to its sectionally rectangular shape.

The sectionally rectangular groove 11a is cut over the full length of the vertical panel 11. The groove is, however, not limited to the exemplified length. While the drawing shows only a single groove 11a in the front surface of the vertical panel 11, a similar groove is also cut in the rear surface of the vertical panel 11 and the two grooves are interconnected by a lateral groove 11b extending between therebetween.

The front and rear surfaces of the lateral panel 12 are similarly cut with sectionally rectangular grooves 12a, 12a' but not with a groove corresponding to the lateral groove 11b.

The vertical panel 11 and lateral panel 12 are interconnected by use of an interconnector 20. As shown in Figure 1, the interconnector 20 has a pair of legs 22a, 22b extending vertically and a pair of legs 22c, 22d extending laterally, i.e., perpendicularly to the pair of legs 22a, 22b. These legs have rectangular cross-sections and are formed to the same width as the grooves cut in the vertical and lateral panels so as to fit snugly in these grooves. In the illustrated embodiment, the legs formed to be rectangular in section so as to fit in the sectionally rectangular grooves.

The method of assembly will now be explained with reference to Figure 4. First, the leg 22b of the interconnector 20 is inserted in the sectionally rectangular groove in the rear surface of the vertical panel 11 and the leg 22a is thereafter inserted in the groove 11a in the front surface of the vertical panel 11. In both cases, the insertion is made from the tip end of the leg. The insertion is continued until the stem portion 20b of the interconnector 20 abuts on and comes to rest at the floor of the lateral groove 11b. Next, the lateral panel 12 is moved horizontally toward the interconnector 20 so that the leg 22d first enters the groove 12a' on the underside of the lateral panel 12 and the leg 22c then enters the groove 12a on the topside thereof. The insertion is continued until the end surface of the lateral panel 12 abuts perpendicularly on the rear surface of the vertical panel 11. Anchors 50 (explained below) provided on the legs are then driven in to fix the interconnector in the grooves and thereby strongly interconnect the vertical panel and the lateral panel.

As best seen in Figure 1, the legs 22a-22d of interconnector 20 are provided near their tips with anchors 50. The anchor 50 of each leg is constituted as a claw projecting inward, i.e., toward the other leg of the pair. When the interconnector 20 is used, the claws provided on the vertical pair of legs 22a, 22b are first forced into strong contact with the floor of the sectionally rectangular grooves of the vertical panel. Since this causes the claws to bite into the floors of the grooves, it establishes strong pressure contact between the legs and the vertical panel. The interconnector 20 straddling the vertical panel with its legs fitted in the grooves is therefore strongly fitted on the vertical panel. Next, the claws provided on the pair of lateral legs 22c, 22d lying perpendicular to the legs 22a, 22b are similarly strongly forced into contact with the floors of the corresponding sectionally rectangular grooves to make them bite into the groove floors. By this, the mutually perpendicular vertical and lateral panels are strongly gripped and interconnected by the interconnector by the two pairs of perpendicularly connected legs.

An interconnector 30 according to another embodiment of the invention is shown in Figure 2. As illustrated, the legs 32a-32d of the interconnector 30 are formed with anchors 60 each including a triangular-rod-shaped drive-fit member 61 made of a hard material that is swingable with respect to the corresponding leg. The drive-fit member 61 has an upper projection 63 and a lower projection 64. In this embodiment, the tip portion of each leg is slotted so as to bifurcate it into two tip segments 34a, 34b. The drive-fit member 61 is supported on a shaft 62 extending between the tip segments 34a, 34b to be swingable or rotatable. When the interconnector is inserted into the grooves of the vertical and lateral panels, each swingable drive-fit member 61 is, as shown in Figure 2, accommodated in the corresponding groove in a popped-up state so as to enable sliding insertion into the groove. After the interconnector has been fitted into the grooves of the vertical and lateral panels, the popped-up triangular-rod-shaped drive-fit members 61 are driven inward by striking the upper projections 63 with a hammer or the like so as to drive the lower projections 64 firmly into the floor of the grooves and thereby strongly fix the interconnector 30 in the sectionally rectangular grooves.

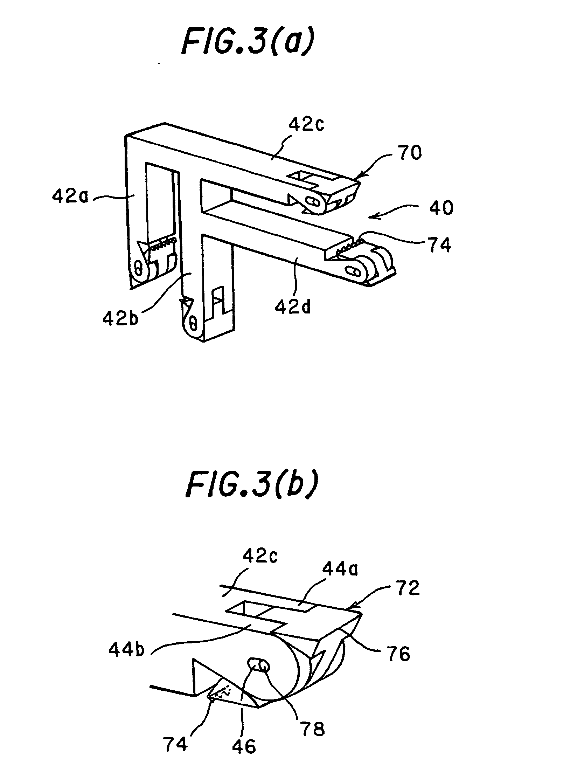

An interconnector 40 according to another embodiment of the invention is shown in Figs. 3(a) & 3(b). The anchors 70 of this embodiment include swinging member 72 capable of slight fore-aft movement. Each swinging member 72 is formed at the tip of its cylindrically curved surface with a sharp blade edge 74. As in the previous embodiment, the tip portion of each leg is slotted so as to bifurcate it into two tip segments 44a, 44b. The swinging member 72 is supported on a shaft 78 extending between the tip segments 44a, 44b. The opposite ends of the shaft 78 are supported in elongated holes 46 formed in the tip segments 44a, 44b. The swinging member 72 can therefore move back and forth slightly. The sharp blade edge 74 is a projection formed on a spherical surface of the swinging member 72. A projection 76 is provided on the diametrically opposite side of the swinging member 72 therefrom. When the interconnector is inserted into the grooves of the vertical and lateral panels, each swinging member 72 moves within the associated long holes and swings to permit sliding insertion along the floor of the groove. To the contrary, when an attempt is made to draw the interconnector out, the sharp edge of the blade 74 contacts the floor of the groove and prevents easy detachment of the interconnector from the groove of the panel.

A structure for biasing the blades downward can be added to ensure reliable biting of the sharp blade edges into the surface of the panel when a force is applied in the direction of extracting the panel. This can be achieved, for example, by inserting a spring between each blade and the associated leg. When the blade biasing structure is provided, movement within the elongated holes is unnecessary and the holes can be formed round.

When a panel is to be extracted, the projections 76 on the opposite side from the blade edges 74 are pressed to release the strong union with the groove floor. By this, the vertical and lateral panels can be freed from the interconnector with utmost ease.

When the vertical panel and the lateral panel are joined at right angles and a load is applied to the lateral panel, a bending moment ordinarily acts on the whole lateral panel in an obliquely downward direction. Since the bending moment centers mainly at the joint, support is required in proportion. In the foregoing embodiments, however, the load is dispersed, with (in the embodiment of Figure 1, for example) tensile load acting on the leg 22c and compressive load acting on leg 22d. Since the legs are made of, for example, sintered metal clad with aluminum or steel, their durability against tension and compression is naturally better than their durability against bending. The overall strength of the structure consisting of multiple (two in this example) members is therefore great even though no reinforcing panel is present.

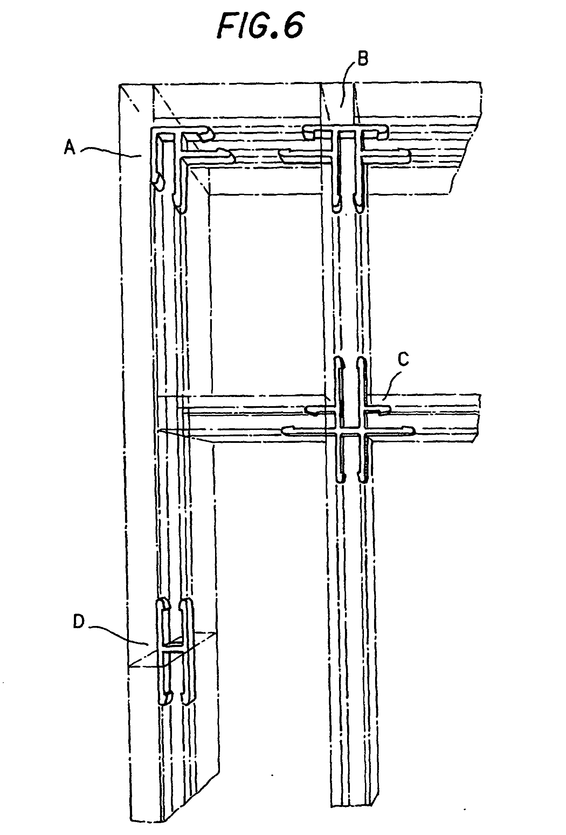

Figure 6 is a perspective view showing the installation locations and variations in the interconnector structures of interconnectors (20, 30, 40) used in assembly. The interconnectors having two mutually perpendicular pairs of legs connected via a stem portion (i.e., the interconnectors 20, 30, 40) are for interconnecting a vertical panel and a lateral panel. At corners where vertical panels and lateral panels constituting the outer enclosure meet at right angles, different interconnectors shown in Figures 1-3 are used. At corners where inner partitions meet at right angles, different interconnectors enabling different interconnecting structures are obtained by varying the directions of the two pairs of legs connected perpendicularly through the stem portion. Specifically, the interconnections illustrated in Figures 1-3 are used at the locations marked A in Figure 6. Other conceivable structures include the structure shown at B for interconnecting laterally and, in the case of perpendicular intersection, the configuration shown at C for four-way interconnection of four intersecting panels and the configuration shown at D for interconnecting for linear extension in opposite directions.

Being configured as explained in the foregoing, the interconnecting structure for multiple members according to the invention provides the following effects when used in the fabricationof furniture, partitions, scaffolding, guardrails, civil engineering structures etc:
1 Since pairs of panels, vertical and lateral, can be strongly interconnected by interconnectors that do not protrude from the panel surfaces, the resulting structure can be given a finish as though the joining were effected without use of fasteners.
2 Since the structure is simple and the interconnector can be strongly fastened to the groove floor by a simple pressing operation after slide insertion, assembly is simple.
3 The interconnector is inserted into the grooves cut into the vertical panel and the lateral panel, whereafter coupling and immobilization are achieved by a one-touch operation of driving in the anchors. Since the interconnector therefore does not project from the surface of the joined members, a structure (e.g., a piece of furniture) fabricated according to the invention can be placed flush against another or against a wall without leaving an intervening space.
4 Since the interconnector is inserted into the grooves cut into the vertical panel and the lateral panel, whereafter coupling and immobilization are achieved by one-touch operation, no fastener of complicated structure is necessary.
5 Sectionally rectangular grooves can be easily cut in conventional panels. This invention can therefore be applied widely to the assembly of architectural modules, knock-down housing, knock-down furniture and the like.
6 The interconnector provided with the anchoring means is inserted into grooves formed in the vertical panel and the lateral panel and solid immobilization is achieved by simply by driving the anchoring means into the floor of the grooves using a hammer of the like. This eliminates any need for fasteners such as screws and nuts and advantageously enables provision of assembled structures that are made of a plurality of generally available materials and have no fasteners projecting from the wall surfaces thereof.

## Claims

1. Interconnecting arrangement comprising
- at least one vertical panel (11) in opposite sides of which grooves (11a, 11a') are formed to extend over the entire length of said vertical panel (11),
- at least one lateral panel (12) in opposite sides of which grooves (12a, 12a') are formed to extend over the entire width of said lateral panel (12),
- at least one interconnector (20; 30; 40) having a stem portion (20b, 30b, 40b), to which a first pair of legs (22a, 22b; 32a, 32b; 42a, 42b) is integrally connected to extend from said stem portion (20b; 30b; 40b) in a first direction and to which a second pair of legs (22c, 22d; 32c, 32d; 42c, 42d) is integrally connected to extend from said stem portion (20b; 30b; 40b) in a second direction being perpendicular to said first direction,
- wherein all of said legs (22a, 22b, 22c, 22d; 32a, 32b, 32c, 32d; 42a, 42b, 42c, 42d) are formed at their tip portions with anchoring means (50; 60; 70) and have sectional shapes matching those of the respective grooves (11a, 11a'; 12a, 12a') in said vertical and said lateral panels (11; 12), respectively,
- wherein said grooves (11a, 11a'; 12a, 12a') in said vertical and said lateral panels (11; 12), respectively, and said legs (22a, 22b, 22c, 22d; 32a, 32b, 32c, 32d; 42a, 42b, 42c, 42d) of said interconnector (20; 30; 40) have rectangular sectional shapes.

2. An interconnecting arrangement according to claim 1, wherein:
the anchoring means (50) provided at the tip portions of each pair of legs (22a, 22b, 22c, 22d) of the interconnector (20) are inwardly projecting claws for enabling the pairs of legs (22a, 22b, 22c, 22d) of the interconnector (20) to establish a strong interconnection between said vertical panel (11) and said lateral panel (12) meeting at a right angle by pressing the claws into strong pressure contact with the floors of said sectionally rectangular grooves (11a, 11a'; 12a, 12a').

3. An interconnecting arrangement according to claim 1, wherein:
the anchoring means (60) provided at the tip portions of the legs (32a, 32b, 32c, 32d) of the interconnector (30) are swingable drive-fit triangular-rod members (61) made of a hard material, sharp edges of said triangular-rod members (61) being adapted to be pounded into the floors of the grooves (11a, 11a'; 12a, 12a') to strongly fasten the interconnector (30) in said sectionally rectangular grooves (11a, 11a'; 12a, 12a').

4. An interconnecting arrangement according to claim 1, wherein:
the anchoring means (70) provided at the tip portions of the legs (42a, 42b, 42c, 42d) of the interconnector (40) are cylinders capable of slight fore-aft movement having sharp blade edges (74) projecting from diametrically opposite portions of their curved surfaces, the blades (74) swinging when the interconnector (40) is inserted into the grooves (11a, 11a'; 12a, 12a') of the vertical panel (11) and the lateral panel (12), respectively, to enable insertion with sliding along the groove floors and the sharp blade edges (74) contacting the floors of the grooves (11a, 11a'; 12a, 12a') to prevent easy detachment of the interconnector (40) from the grooves (11a, 11a'; 12a, 12a') when extraction of the interconnector (40) is attempted.

## Patentansprüche

1. Verbindungsanordnung, die folgendes umfaßt:
- wenigstens eine vertikale Platte (11), in deren einander gegenüberliegenden Seiten Rillen (11a, 11a') so ausgebildet sind, daß sie sich über die gesamte Länge der vertikalen Platte (11) erstrecken,
- wenigstens eine horizontale Platte (12), in deren einander gegenüberliegenden Seiten Rillen (12a, 12a') so ausgebildet sind, daß sie sich über die gesamte Breite der horizontalen Platte (12) erstrecken,
- wenigstens einen Verbinder (20; 30; 40), der einen Schaftteil (20b, 30b, 40b) umfaßt, mit dem ein erstes Schenkelpaar (22a, 22b; 32a, 32b; 42a, 42b) einstückig so verbunden ist, daß es sich ausgehend von dem Schaftteil (20b; 30b; 40b) in einer ersten Richtung erstreckt, und mit dem ein zweites Schenkelpaar (22c, 22d; 32c, 32d; 42c, 42d) einstückig so verbunden ist, daß es sich ausgehend von dem Schaftteil (20b; 30b; 40b) in einer zweiten Richtung erstreckt, die zur ersten Richtung senkrecht verläuft,
- wobei alle Schenkel (22a, 22b, 22c, 22d; 32a, 32b, 32c, 32d; 42a, 42b, 42c, 42d) an ihren Endteilen mit Verankerungseinrichtungen (50; 60; 70) ausgebildet sind und Querschnittsformen aufweisen, die zu denen der betreffenden Rillen (11a, 11a'; 12a, 12a') in den vertikalen bzw. horizontalen Platten (11; 12) passen,
- wobei die Rillen (11a, 11a'; 12a, 12a') in den vertikalen bzw. horizontalen Platten (11; 12) und die Schenkel (22a, 22b, 22c, 22d; 32a, 32b, 32c, 32d; 42a, 42b, 42c, 42d) der Verbinder (20; 30; 40) rechtwinkelige Querschnittsformen besitzen.

2. Verbindungsanordnung nach Anspruch 1, bei der die Verankerungseinrichtungen (50), die an den Endteilen eines jeden Schenkelpaares (22a, 22b, 22c, 22d) des Verbinders (20) vorgesehen sind, nach innen vorspringende Klauen sind, um es den Schenkelpaaren (22a, 22b, 22c, 22d) des Verbinders (20) zu ermöglichen, eine feste Verbindung zwischen der vertikalen Platte (11) und der horizontalen Platte (12) herzustellen, die sich unter einem rechten Winkel treffen, indem die Klauen in einen festen Druckkontakt mit den Böden der im Querschnitt rechtwinkeligen Rillen (11a, 11a'; 12a, 12a') gedrückt werden.

3. Verbindungsanordnung nach Anspruch 1, bei der die Verankerungseinrichtungen (60), die an den Endteilen der Schenkel (32a, 32b, 32c, 32d) des Verbinders (30) vorgesehen sind, verschwenkbare, dreieckig-stabförmige Preßsitz-Elemente (61) sind, die aus einem harten Material hergestellt sind, wobei scharfe Kanten der dreieckig-stabförmigen Elemente (61) so ausgebildet sind, daß sie in die Böden der Rillen (11a, 11a'; 12a, 12a') eingeschlagen werden können, um den Verbinder (30) in den im Querschnitt rechtwinkeligen Rillen (11a, 11 a'; 12a, 12a') in einer festen Verbindung zu befestigen.

4. Verbindungsanordnung nach Anspruch 1, bei der die Verankerungseinrichtungen (70), die an den Endteilen der Schenkel (42a, 42b, 42c, 42d) des Verbinders (40) vorgesehen sind, Zylinder sind, die eine kleine Vor-Rück-Bewegung ausführen können und scharfe Klingenkanten (74) besitzen, die von einander diametral gegenüberliegenden Teilen ihrer gekrümmten Oberflächen vorstehen, wobei die Klingen (74) schwingen, wenn der Verbinder (40) in die Rillen (11 a, 11 a'; 12a, 12a') der vertikalen Platte (11) bzw. der horizontalen Platte (12) eingeführt wird, um eine Einführung unter einem Gleiten längs der Rillenböden zu ermöglichen, wobei die scharfen Klingenkanten (74) die Böden der Rillen (11a, 11a'; 12a, 12a') berühren, um eine einfache Ablösung des Verbinders (40) aus den Rillen (11a, 11a'; 12a, 12a') zu verhindern, wenn versucht wird, den Verbinder (40) herauszuziehen.

## Revendications

1. Arrangement d'interconnexion comprenant :
- au moins un panneau vertical (11) dans des côtés opposés duquel sont formées des rainures (11a, 11a') pour s'étendre sur toute la longueur dudit panneau vertical (11),
- au moins un panneau latéral (12) dans des côtés opposés duquel sont formées des rainures (12a, 12a') pour s'étendre sur toute la largeur dudit panneau latéral (12),
- au moins un interconnecteur (20 ; 30 ; 40) ayant une partie de tige (20b ; 30b ; 40b), à laquelle est connectée de manière monobloc une première paire de pattes (22a, 22b ; 32a, 32b ; 42a, 42b) pour s'étendre à partir de ladite partie de tige (20b ; 30b ; 40b) dans une première direction, et à laquelle est connectée de manière monobloc une seconde paire de pattes (22c, 22d ; 32c, 32d ; 42c, 42d) pour s'étendre à partir de ladite partie de tige (20b ; 30b ; 40b) dans une seconde direction perpendiculaire à ladite première direction,
- dans lequel la totalité desdites pattes (22a, 22b, 22c, 22d ; 32a, 32b, 32c, 32d ; 42a, 42b, 42c, 42d) sont formées au niveau de leurs parties d'extrémité avec des moyens d'ancrage (50 ; 60 ; 70), et présentent des formes en section s'adaptant à celles des rainures respectives (11a, 11a' ; 12a, 12a') formées dans lesdits panneaux vertical et latéral (11 ; 12) respectivement,
- dans lequel lesdites rainures (11a, 11a' ; 12a, 12a') formées dans lesdits panneaux vertical et latéral (11 ; 12) respectivement, et lesdites pattes (22a, 22b, 22c, 22d ; 32a, 32b, 32c, 32d ; 42a, 42b, 42c, 42d) dudit interconnecteur (20 ; 30 ; 40) présentent des formes rectangulaires en section.

2. Arrangement d'interconnexion selon la revendication 1, dans lequel :
les moyens d'ancrage (50) prévus au niveau des parties d'extrémité de chaque paire de pattes (22a, 22b, 22c, 22d) de l'interconnecteur (20) sont des griffes se projetant vers l'intérieur pour permettre aux paires de pattes (22a, 22b, 22c, 22d) de l'interconnecteur (20) d'établir une interconnexion forte entre ledit panneau vertical (11) et ledit panneau latéral (12) formant ensemble un angle droit en comprimant les griffes dans un contact de pression fort avec les fonds desdites rainures en section rectangulaire (11a, 11a' ; 12a, 12a').

3. Arrangement d'interconnexion selon la revendication 1, dans lequel :
les moyens d'ancrage (60) prévus au niveau des parties d'extrémité des pattes (32a, 32b, 32c, 32d) de l'interconnecteur (30) sont des éléments de tige triangulaire en ajustement serré et basculables (61) réalisés en un matériau dur, des bords aigus des éléments de tige triangulaire (61) étant adaptés à être martelés dans les fonds des rainures (11a, 11a'; 12a, 12a') pour solidement fixer l'interconnecteur (30) dans lesdites rainures en section rectangulaire (11a, 11a' ; 12a, 12a').

4. Arrangement d'interconnexion selon la revendication 1, dans laquelle :
les moyens d'ancrage (70) prévus au niveau des parties d'extrémité des pattes (42a, 42b, 42c, 42d) de l'interconnecteur (40) sont des cylindres aptes à réaliser un léger mouvement d'avant en arrière présentant des bords de lames aigus (74) se projetant à partir de parties diamétralement opposées de leurs surfaces courbes, les lames (74) basculant lorsque l'interconnecteur (40) est inséré dans les rainures (11a, 11a'; 12a, 12a') du panneau vertical (11) et du panneau latéral (12), respectivement, pour permettre l'insertion avec coulissement le long des fonds des rainures et les bords de lames aigus (74) étant en contact avec les fonds des rainures (11a, 11a'; 12a, 12a') pour empêcher une séparation aisée de l'interconnecteur (40) des rainures (11a, 11a' ; 12a, 12a') lorsque une extraction de l'interconnecteur (40) est tentée.
